(19) Europäisches Patentamt

European Patent Office

Office européen des brevets

(11) **EP 1 354 147 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(21) Anmeldenummer: **01956269.3**

(22) Anmeldetag: **13.06.2001**

(51) Int Cl.⁷: **F16D 65/34**, B60T 13/74

(86) Internationale Anmeldenummer:
**PCT/DE2001/002210**

(87) Internationale Veröffentlichungsnummer:
**WO 2002/059496 (01.08.2002 Gazette 2002/31)**

(54) **ELEKTROMOTORISCHE FESTSTELLBREMSE, INSBESONDERE FÜR EIN KRAFTFAHRZEUG**

ELECTROMOTIVE PARKING BRAKE, ESPECIALLY FOR A MOTOR VEHICLE

FREIN DE STATIONNEMENT ELECTROMOTEUR, NOTAMMENT POUR UN VEHICULE AUTOMOBILE

(84) Benannte Vertragsstaaten:
**DE FR GB**

(30) Priorität: **25.01.2001 DE 10103295**

(43) Veröffentlichungstag der Anmeldung:
**22.10.2003 Patentblatt 2003/43**

(73) Patentinhaber: **SIEMENS AKTIENGESELLSCHAFT
80333 München (DE)**

(72) Erfinder:
- **BAIER-WELT, Christian
  97222 Rimpar (DE)**
- **ROOS, Stephan
  97877 Wertheim (DE)**

(56) Entgegenhaltungen:
**WO-A-90/15743      DE-A- 3 423 510
DE-A- 4 138 625      GB-A- 1 562 630**

EP 1 354 147 B1

**Beschreibung**

Die Erfindung betrifft eine elektromotorische Feststellbremse, insbesondere für ein Kraftfahrzeug.

Elektromotorische Feststellbremsen in Kraftfahrzeugen, siehe z.B. WO-90/15743, sollen den mit Muskelkraft betätigten mechanischen Handbremshebel ersetzen. Hierbei muss die elektromotorische Feststellbremse die aufzubauende Bremskraft am Bremsseil in sehr kurzer Zeit mit dem Bordnetz verfügbaren Strom bei möglichst kompakten Abmessungen aufbauen können. Nach dem Anziehen der Bremse und Abschalten des Motors muss weiterhin durch geeignete Maßnahmen sichergestellt werden, dass sich die Bremse durch eine eventuelle unbeabsichtigte Rückbewegung des Bremsseils nicht von selbst lösen kann.

Bekannte elektromotorische Feststellbremsen weisen einen Elektromotor auf, der ein Spindelgetriebe antreibt. Durch das Spindelgetriebe wird die Rotationsbewegung des Elektromotors in eine Translationsbewegung der Spindel umgewandelt. Die Translationsbewegung der Spindel wird auf ein Bremsstellgestänge übertragen, das fest mit dem Bremsseil verbunden ist. Zur Vermeidung einer unbeabsichtigten Rückbewegung des Bremsseils nach Abschalten des Motors ist das Spindelgetriebe selbsthemmend ausgelegt. Die Selbsthemmungseigenschaft wird durch eine niedrige Steigung des Gewindes der Spindel erreicht. Dies führt in der Folge jedoch zu einem geringen Wirkungsgrad der Feststellbremse, da ein solches Spindelgetriebe starke Reibungsverluste aufweist und auslegungsbedingt in der Regel ein mit weiteren Verlusten behaftetes Getriebe zwischen den Motor und die Spindel geschaltet werden muß. Ferner weisen solche Feststellbremsen ein großes Bauvolumen auf, da aufgrund des geringen Wirkungsgrades ein größerer Motor benötigt wird. Ein weiterer Nachteil besteht darin, daß aufgrund des großen Motors ein Strombedarf besteht, der durch ein Bordnetz nicht immer gedeckt werden kann.

Der Erfindung liegt die Aufgabe zugrunde, eine elektromotorische Feststellbremse anzugeben, der ein besonders geringes Bauvolumen und einen besonders hohen Wirkungsgrad aufweist.

Die Aufgabe wird gelöst durch eine elektromotorische Feststellbremse nach Anspruch 1.

Zur Betätigung der Feststellbremse wird der Elektromotor betätigt. Der Rotor des Elektromotors dreht sich dabei in eine Richtung, die ein Zuspannen der Bremsbeläge des Fahrzeuges bewirken soll (Bremsrichtung). Die Drehbewegung in Bremsrichtung wird über die Bremsstell- Abtriebswelle auf die Kurvenscheiben- bzw. Kulissenführung übertragen. Dadurch bewegt sich das Verstellelement, das entlang einer ersten Achse verstellbar angeordnet ist, entlang der Fläche der Kurvenscheiben- bzw. Kulissenführung. Die Fläche der Kurvenscheiben- bzw. Kulissenführung ist so ausgebildet, dass das Verstellelement eine Translationsbewegung durchführt. Das Bremsstell-Gestänge, das wie das Verstellelement entlang der ersten Achse verstellbar angeordnet ist, führt daraufhin ebenfalls eine Translationsbewegung durch.

Die Antriebsverbindung bestehend aus einer solchen Kurvenscheiben- bzw. Kulissenführung und einem solchen Verstellelement weist sehr geringe Reibungsverluste auf, so dass die Feststellbremse einen hohen Wirkungsgrad aufweist.

Das Bremsstell- Gestänge ist im wesentlichen senkrecht zur Bremsstell- Abtriebswelle angeordnet. Das heißt, dass die erste Achse im wesentlichen senkrecht zur zweiten Achse steht.

Der Motor besitzt in der Regel seine größte Ausdehnung entlang der Motorachse. Da sowohl die Motorwelle des Bremsstell-Elektromotors als auch das Bremsstell- Gestänge im wesentlichen senkrecht zur zweiten Achse verlaufen, ist die Ausdehnung der Feststellbremse entlang der zweiten Achse besonders gering. Der Motor und das Bremsstell- Gestänge sind also in geringem Abstand voneinander angeordnet. Die Feststellbremse ist folglich besonders kompakt.

Die Feststellbremse weist eine nur geringe Bauhöhe auf, da achsparallel angeordnet sind.

Die Feststellbremse ist besonders kompakt, wenn die Motorachse annähernd achsparallel zur ersten Achse verläuft, da die Ausdehnung der Feststellbremse auch in Richtung senkrecht zur ersten Achse und zur zweiten Achse besonders gering ist.

Die Bremsstell- Abtriebswelle ist beispielsweise über ein Schneckengetriebe mit der Motorwelle verbunden. Dadurch können mit einem kleinen, kostengünstigen Motor große Drehmomente an der Abtriebswelle und in der Folge hohe Betätigungskräfte an den Bremsseilen erreicht werden.

Die Kurvenscheiben- bzw. Kulissenführung ist nockenähnlich ausgestaltet. Die Fläche, entlang der das Verstellelement geführt wird, bildet den Umfang der Kurvenscheiben- bzw. Kulissenführung. Die Kurvenscheiben- bzw. Kulissenführung weist also ein radiales Höhenprofil auf.

Eine radiale Kurvenscheiben- bzw. Kulissenführung lässt sich besonders einfach und kostengünstig herstellen, da die Kurvenscheiben- bzw. Kulissenführung fertigungstechnisch gesehen zweidimensional ist.

Eine Feststellbremse mit einer radialen Kurvenscheiben- bzw. Kulissenführung weist den zusätzlichen Vorteil auf, dass das Verstellelement die Kurvenscheiben- bzw. Kulissenführung radial statt z.B. axial belastet, was zu wesentlich günstigeren Lagerkräften führt und wodurch die Lebensdauer der Feststellbremse erhöht wird.

Da die Steigung der Fläche, entlang der das Verstellelement geführt wird, zusammen mit der Kraft, die durch das Bremsgestänge auf das Verstellelement wirkt, das minimale erforderliche Drehmoment des Elektromotors bestimmt, kann die Fläche durch Variation seiner Kurvensteigung so ausgelegt werden, dass der Elektromotor im wesentlichen während des gesamten Bremsvorgangs in etwa konstant belastet wird, obwohl während des Bremsvorgangs die Brems- Zustellkräfte für das Bremsstell- Gestänge stark variieren.

Es ergibt sich folgende Beziehung zwischen der Kraft $F_B$ auf das Bremsstell- Gestänge und dem Moment M auf der Bremsstell-Abtriebswelle:

$$M = F_B * dH/d\alpha$$

mit H = Höhe der Kurve gemessen vom Mittelpunkt der Kurvenscheiben- bzw. Kulissenführung
und $\alpha$ = Drehwinkel im Bogenmaß

Die Form der Kurvenscheiben- bzw. Kulissenführung ist also so ausgelegt, daß die Zuspannkraft auf dem Bremsstell- Gestänge trotz ihrer im Verlauf des Bremsvorgangs in der Regel zunehmenden Höhe ein im wesentlichen gleichbleibendes Drehmoment auf der Bremsstell- Abtriebswelle und damit in der Folge eine gleichbleibende Motorbelastung zur Folge hat. Dadurch kann der Elektromotor ständig in seinem günstigsten Arbeitspunkt unter Erzeugung eines bestimmten Drehmoments arbeiten, so dass der Elektromotor hinsichtlich seiner Baugröße und seiner batteriebeanspruchenden Leistung entsprechend einer Minimal-Belastung ausgelegt werden kann. Dies führt zu einem besonders hohen Wirkungsgrad der Feststellbremse und einer guten Motorausnutzung. Die Bremszeit wird bei vorgegebener Maximalleistung des Elektromotors durch die beschriebenen Maßnahmen auf ein Minimum reduziert, da bei geringer Kraft am Verstellelement, das heißt bei einer geringen Brems- Zustellkraft, die Leistung des Elektromotors trotzdem optimal ausgenutzt wird, indem eine besonders schnelle Translationsbewegung des Bremsstell- Gestänges durchgeführt wird. In der Praxis bedeutet dies im wesentlichen, dass zu Beginn des Bremsvorgangs zur Überwindung des Lüftspiels und der anderen mechanischen Spiele eine große Steigung der Fläche, das heißt eine kleinere Übersetzung, und im Bereich der hohen Zuspannkräfte für das Anpressen der Bremsbeläge eine kleinere Steigung der Fläche, das heißt eine größere Übersetzung zwischen der Bremsstell- Abtriebswelle und dem Bremsstell- Gestänge vorgesehen ist.

Die Verwendung einer Kurvenscheiben- bzw. Kulissenführung ermöglicht also eine an die Bremsstellbelastung angepasste variable Übersetzung zwischen Rotation und Translation im Verlauf des Bremsvorgangs.

Das Getriebe, das die Bremsstell- Abtriebswelle mit der Motorwelle verbindet, ist beispielsweise selbsthemmend ausgebildet, damit bei stromlosem Motor eine unbeabsichtigte Rückbewegung des Bremsstell- Gestänges vermieden wird.

Die selbsthemmende Eigenschaft der Feststellbremse wird alternativ beispielsweise durch eine Raststellung in der Fläche der Kurvenscheiben- bzw. Kulissenführung im Sinne einer gegenüber Rückstellungskräften selbsthemmenden Fix- Positionierung des Verstellelements realisiert.

Die Raststellung stellt beispielsweise eine Vertiefung in der Fläche der Kurvenscheiben- bzw. Kulissenführung dar, in deren Mitte die Steigung der Fläche gleich Null ist. Bei Abschalten des Elektromotors bewirkt der durch das Bremsstell- Gestänge hervorgerufene Druck des Verstellelements auf die Fläche der Kurvenscheiben- bzw. Kulissenführung außerhalb der Raststellung, dass die Kurvenscheiben- bzw. Kulissenführung sich aufgrund der Steigung ihrer Fläche entgegen der Bremsrichtung dreht, bis das Verstellelement in der Raststellung einrastet. Die Vertiefung ist derart ausgelegt, dass das Verstellelement auch nicht aufgrund von Erschütterungen selbständig aus der Raststellung rutschen kann. Die Raststellung stellt ein lokales energetisches Minimum dar. Befindet sich das Verstellelement in der Raststellung, so führt der Druck des Verstellelements auf die Kurvenscheiben- bzw. Kulissenführung nicht zu einem Rückstellmoment auf Getriebe und Motor. Das Verstellelement ist daher in der Raststellung fest positioniert. Erst eine Betätigung des Elektromotors in Bremsrichtung oder in zur Bremsrichtung entgegengesetzter Drehrichtung kann das Verstellelement aus der Raststellung lösen.

Vorzugsweise befindet sich die Raststellung an der Stelle der Fläche der Kurvenscheiben- bzw. Kulissenführung, an der sich das Verstellelement befindet, wenn die Feststellbremse im wesentlichen mit Nennkraft angezogen ist.

Es ist vorteilhaft, wenn eine weitere Raststellung hinter der Raststellung angeordnet ist, um kurzfristige Längungen im Seil- und Bremssystem, vor allem Wärmespiele, ausgleichen und die volle Nennkraft erreichen zu können.

Es liegt im Rahmen der Erfindung, im Verlauf der Fläche der Kurvenscheiben- bzw. Kulissenführung weitere Raststellungen anzuordnen.

Das Bremsstell- Gestänge kann z.B. parallel zum Fahrzeugboden verläuft.

Vorzugsweise ist eine zusätzliche Hebelumsetzung zwischen dem Verstellelement und dem Bremsstell- Gestänge angeordnet, um mit der Kurvenscheiben- bzw. Kulissenführung einen größeren Seilweg zurücklegen oder höhere Seilkräfte erreichen zu können.

Im folgenden werden Ausführungsbeispiele der Erfindung anhand der Figuren näher erläutert.

Figur 1    zeigt in einer querschnittsartigen Aufsicht den Aufbau einer elektromotorischen Feststellbremse.

Figur 2    zeigt eine Ansicht eines verwendeten Schneckengetriebes der Feststellbremse.

Figur 3    zeigt eine Schnitt durch die Feststellbremse, in der die gegenseitige Stellung von Kurvenscheiben- bzw. Kulissenführung und Verstellelement zum Ende eines Bremsvorganges dargestellt ist.

Figur 4    zeigt eine Seitenansicht aus Figur 1, in der eine Linearführung eines Bremsstell- Gestänges zu Beginn eines Bremsvorganges dargestellt ist.

Figur 5    zeigt die Abwicklung des Höhenprofils über den Umdrehungswinkel der Kurvenscheiben- bzw. Kulissenführung und die Lagedarstellung des Verstellelements bzw. dessen endseitiger Laufrolle gemäß den beiden Stellungen aus Figur 3 und Figur 4.

Figur 6    zeigt schematisch eine Hebelumsetzung einer weiteren Feststellbremse.

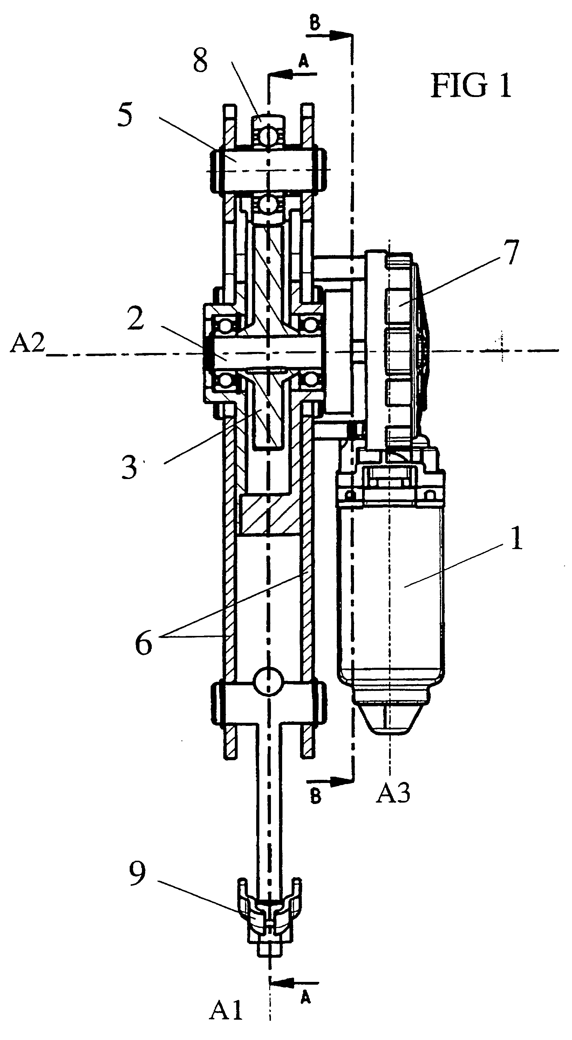

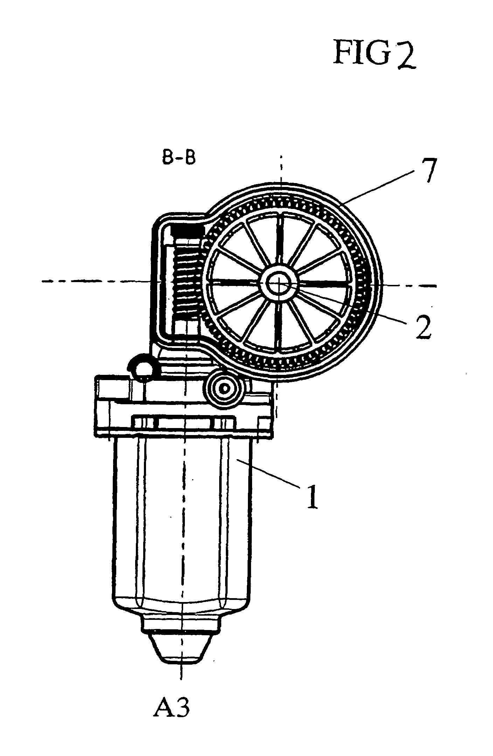

In einem Ausführungsbeispiel weist eine Feststellbremse einen Bremsstell- Elektromotor 1, insbesondere einen Kommutatormotor, auf. Der Elektromotor 1 treibt über ein Schneckengetriebe 7 eine Bremsstell-Abtriebswelle 2 an, die sich senkrecht zur Motorachse A3 und damit Motorwelle erstreckt (siehe Figuren 1 und 2). Die Bremsstell- Abtriebswelle 2 erstreckt sich entlang einer zweiten Achse A2.

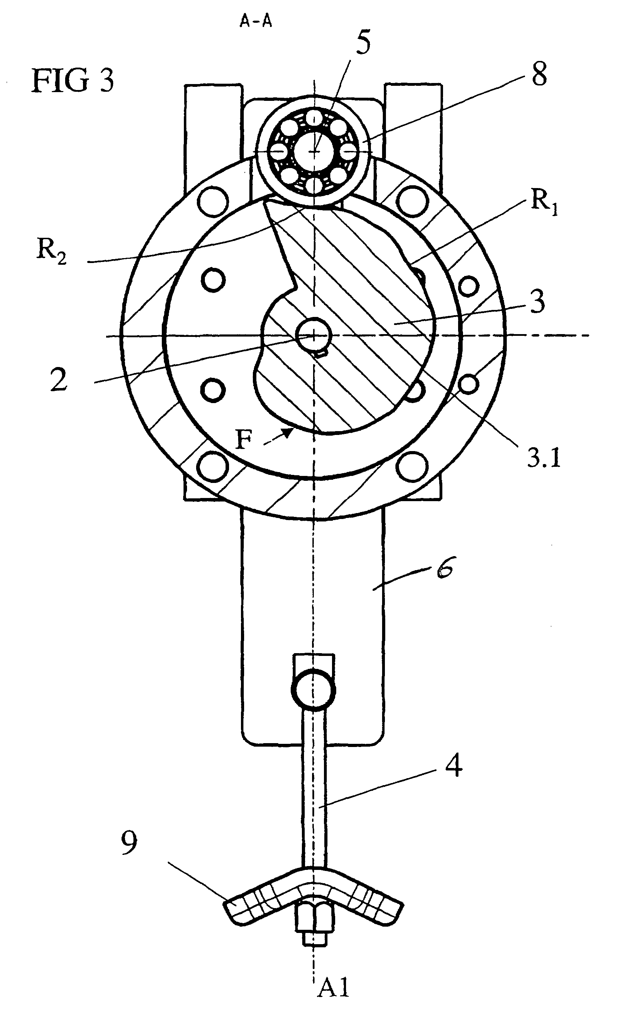

Konzentrisch zu der Bremsstell- Abtriebswelle 2 ist eine radiale Kurvenscheiben- bzw. Kulissenführung 3 befestigt, die ein radiales Höhenprofil 3.1 aufweist, das am Umfang der Kurvenscheiben- bzw. Kulissenführung 3 eine Fläche F beschreibt (siehe Figur 3).

Ein querriegelartiges axiales Verstellelement 5 mit einer Laufrolle 8 ist entlang einer ersten Achse A1, die senkrecht zur zweiten Achse A2 und achsparallel zur Motorachse A3 verläuft, verstellbar angeordnet. Die Laufrolle 8 liegt auf der Fläche F auf. Bei Drehung der Kurvenscheiben- bzw. Kulissenführung 3, wird die Laufrolle 8 entlang der Fläche F geführt, wodurch das Verstellelement 5 eine dem Verlauf des radialen Höhenprofils 3.1 (Hubhöhe H als Funktion des Umdrehungswinkel $\alpha$) entsprechende Translationsbewegung entlang der ersten Achse A1 ausführt (siehe Figur 3). Für die mit der Bremsstell- Abtriebswelle 2 rotierende Kurvenscheiben- bzw. Kulissenführung 3 ist ein maximaler Umdrehungswinkel von ca. 360° vorgesehen.

Die Fläche F weist zwei als Vertiefungen ausgestaltete Raststellungen R1, R2 auf.

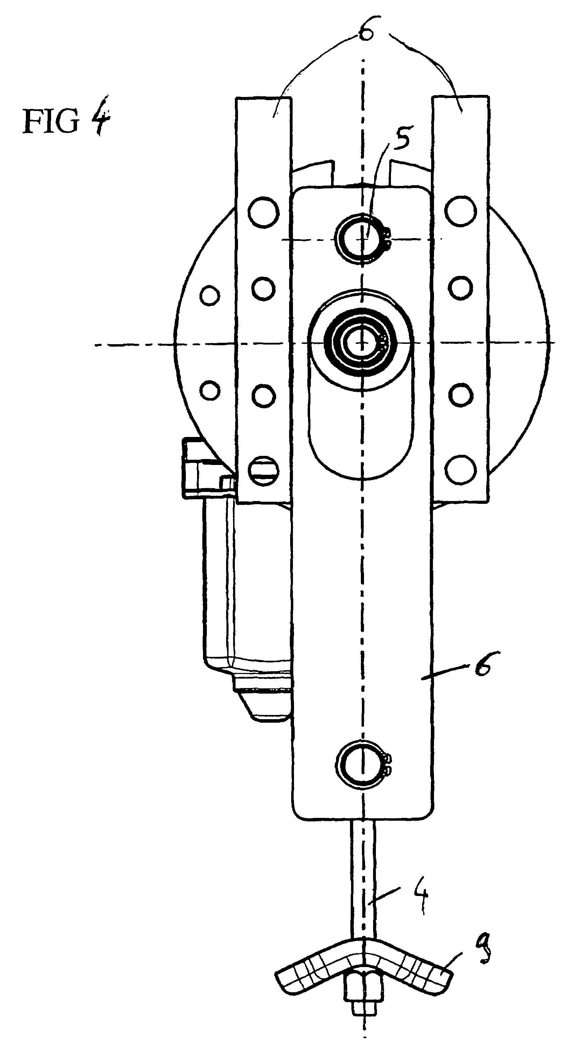

Das Verstellelement 5 ist über eine Linearführung 6 (Figuren 3 und 4), die als schlitzgeführte Zugvorrichtung ausgestaltet ist, und über ein Bremsstell- Gestänge 4 mit einer Seilwaage 9 verbunden, welche konzentrisch zur ersten Achse A1 angeordnet ist (siehe Figur 4).

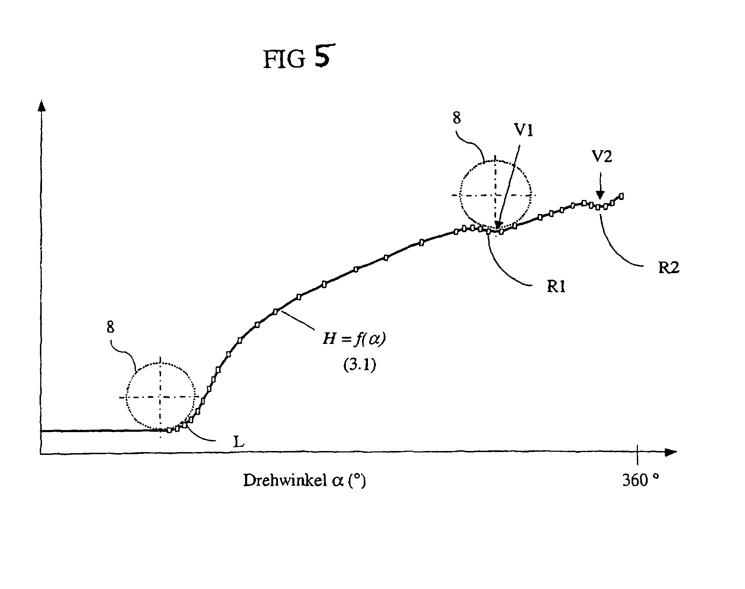

Ein für die Betätigung einer Feststellbremse spezifisches Höhenprofil H = f($\alpha$) ist in Figur 5 dargestellt. Das Höhenprofil, das den Verlauf der Fläche F der Kurvenscheiben- bzw. Kulissenführung 3, auf dem das Verstellelement 5 bewegt wird, wiedergibt, weist zwei Raststellungen R1, R2 auf. Die erste Raststellung R1 befindet sich bei $\alpha$ = ca. 320° an der Stelle der Fläche F der Kurvenscheiben- bzw. Kulissenführung 3, an der sich das Verstellelement 5 befindet, wenn die Feststellbremse im wesentlichen mit Nennkraft angezogen ist. Die zweite Raststellung R2 befindet sich hinter der ersten Raststellung R1.

Figur 5 zeigt ferner zwei beispielhafte Positionen zwischen einer linken Lösestellung L ($\alpha$ = 40°) und einer rechten Bremsstellung der das freie Ende des Verstellelements 5 führenden Laufrolle 8. In der rechten Bremsstellung befindet sich das Vestellelement 5 in der ersten Raststellung R1. In beiden Raststellungen R1, R2 ist nach einer Ausgestaltung der Erfindung die Laufrolle 8 und somit das freie Ende des Verstellelements 5 entgegen einer möglichen systembedingten Rückstellkraft nach Art einer durch den Antrieb des Bremsstell-Elektromotor 1 bei dessen Aktivierung aufhebbaren Selbsthemmung dadurch fixierbar, dass Vertiefungen V1, V2 in dem Verlauf H = f($\alpha$) des axialen Höhenprofils 3.1 der Kurvenscheiben- bzw. Kulissenführung 3 vorgesehen sind, in welche die Laufrolle 8 einsinkt und dadurch fixierbar ist. Auch die linke Lösestellung L stellt eine Art Vertiefung dar, in der das Verstellelement 5 verbleibt, wenn der Elektromotor 1 nicht betätigt wird.

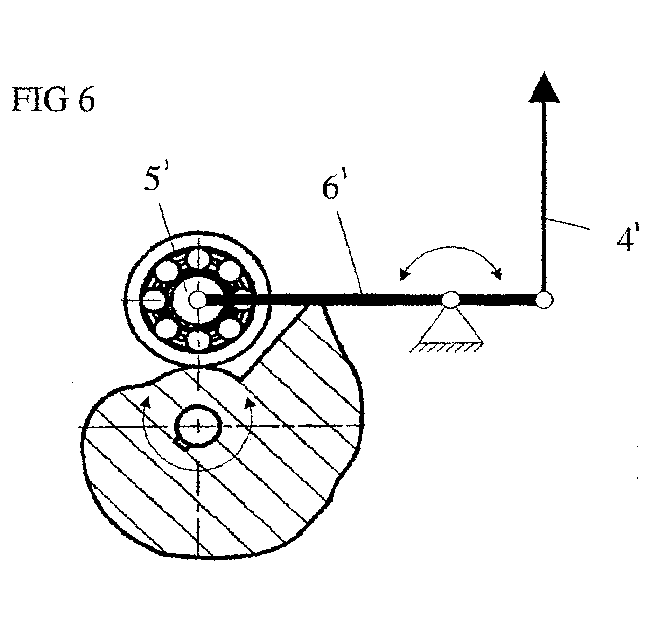

In Figur 6 ist das Verstellelement 5', die Kurvenscheiben- bzw. Kulissenführung 3' und das Bremsstell-Gestänge 4' einer weiteren Feststellbremse dargestellt, wobei zwischen dem Verstellelement und dem Bremsstell-Gestänge 4' eine Hebelumsetzung 6' geschaltet ist, die schematisch dargestellt ist.

**Patentansprüche**

1.  Elektromotorische Feststellbremse insbesondere für ein Kraftfahrzeug,

    -   mit einem Bremsstell- Elektromotor (1), insbesondere Kommutatormotor,
    -   mit einer vom Bremsstell- Elektromotor (1) angetriebenen Bremsstell- Abtriebswelle (2), die sich entlang einer zweiten Achse (A2) erstreckt,
    -   mit einem Bremsstell- Gestänge (4), das parallel zu einer ersten Achse (A1) verstellbar angeordnet ist, die im wesentlichen senkrecht zur zweiten Achse (A2) verläuft,
    -   mit einer Antriebsverbindung von der Bremsstell- Abtriebswelle (2) zum Bremsstell- Gestänge (4) in Form einer nockenförmigen Kurvenscheiben- bzw. Kulissenführung (3) im Sinne einer Umsetzung der Rotation der Bremsstell- Abtriebswelle (2) in eine Translation des Bremsstell- Gestänges (4) durch ein entlang einer Fläche (F) der Kurvenscheiben- bzw. Kulissenführung (3) geführtes Verstellelement (5),

- bei der die Fläche (F) der Kurvenscheiben- bzw. Kulissenführung (3) ein radiales Höhenprofil bildet,
- bei der die Motorachse (A3) des Bremsstell- Elektromotors (1) im wesentlichen senkrecht zur zweiten Achse (A2) verläuft.

2. Feststellbremse nach Anspruch 1,

- mit einem Schneckengetriebe (7) im Antriebsstrang zwischen dem Bremsstell- Elektromotor (1) und der Bremsstell- Abtriebswelle (2).

3. Feststellbremse nach Anspruch 1 oder 2,

- mit einer Ausbildung der Kurvenscheiben - bzw. Kulissenführung (3) im Sinne einer im wesentlichen konstanten Belastung des Bremsstell- Elektromotors (1) während im wesentlichen des gesamten Bremsvorganges.

4. Feststellbremse nach einem der Ansprüche 1 bis 3,

- mit mindestens einer Raststellung (R1) in der Fläche (F) der Kurvenscheiben- bzw. Kulissenführung (3) im Sinne einer gegenüber Rückstellungskräften selbsthemmenden Fix-Positionierung des Verstellelements (5).

5. Feststellbremse nach Anspruch 4,

- bei der sich die Raststellung (R1) an der Stelle der Fläche (F) der Kurvenscheiben- bzw. Kulissenführung (3) befindet, an der sich das Verstellelement (5) befindet, wenn die Feststellbremse im wesentlichen mit Nennkraft angezogen ist.

6. Feststellbremse nach Anspruch 4 oder 5,

- bei der in der Fläche (F) der Kurvenscheiben- bzw. Kulissenführung (3) mindestens eine weitere Raststellung (R2) angeordnet ist.

7. Feststellbremse nach einem der Ansprüche 1 bis 6,

- bei der ein Getriebe, das die Bremsstell- Abtriebswelle mit der Motorwelle verbindet, selbsthemmend ausgebildet ist.

8. Feststellbremse nach einem der Ansprüche 1 bis 7,

- mit einer zusätzlichen Hebelumsetzung (6) zwischen dem Verstellelement (5) an dem Bremsstell- Gestänge (4).

9. Feststellbremse nach einem der Ansprüche 1 bis 8,

- bei der die Raststellung (R1) als Vertiefung der Fläche (F) der Kurvenscheiben- bzw. Kulissenführung (3) ausgebildet ist.

10. Feststellbremse nach einem der Ansprüche 1 bis 9,

- bei der die Motorachse (A3) achsparallel zur ersten Achse (A1) verläuft.

**Claims**

1. Electric-motor driven parking brake in particular for a vehicle,

- with an electric brake-actuating motor (1), in particular a commutator motor,
- with a brake-actuating output shaft (2) which extends along a second axis A2 and is driven by the electric brake -actuating motor (1),
- with a brake-actuating linkage (4) which is arranged so that it can move parallel to a first axis (A1) which is essentially perpendicular to the second axis (A2),
- with a drive linkage from the brake -actuating output shaft (2) to the brake-actuating linkage (4) in the form of a cam disk or gate guide (3) which is cam-like in the sense that it converts a rotation of the brake-actuating output shaft (2) into a translational movement of the brake -actuating linkage (4) by means of an actuation element (5) which is guided along a surface (F) of the cam disk or gate guide (3),
- whereby the surface (F) of the cam disk or gate guide (3) forms a height profile in a radial direction,
- whereby the orientation of the motor axis (A3) of the electric brake-actuating motor (1) is essentially perpendicular to the second axis (A2).

2. Parking brake in accordance with Claim 1,

- with a worm drive (7) in the drive tr ain between the electric brake-actuating motor (1) and the brake -actuating output shaft (2)

3. Parking brake in accordance with Claim 1 or 2,

- with the cam disk or gate guide (3) being shaped with the intention that an essentially constant load is exerte d on the electric brake- actuating motor (1) over essentially the entire brake-actuation cycle.

4. Parking brake in accordance with one of Claims 1 to 3,

- with at least one rest position (R1) in the surface (F) of the cam disk or gate guide (3) with the intention of effecting a fixed positioning, which is self-locking with respect to restorative forces, of the actuation element (5).

5. Parking brake in accordance with Claim 4,

- whereby the rest position (R1) is located at the position on the surface (F) of the cam disk or gate guide (3) at which the actuation element (5) is located when the parking brake is pulled on with essentially nominal force.

6. Parking brake in accordance with Claim 4 or 5,

- whereby at least one further rest position (R2) is arra nged in the surface (F) of the cam disk or gate guide (3).

7. Parking brake in accordance with one of Claims 1 to 6,

- whereby a gearbox, which links the brake -actuating output shaft to the motor shaft, is of self-locking construction.

8. Parking brake in accordance with one of Claims 1 to 7,

- with an additional leverage conversion (6) between the actuation element (5) and the brake-actuating linkage (4).

9. Parking brake in accordance with one of Claims 1 to 8,

- whereby the rest position (R1) takes th e form of a depression in the surface (F) of the cam disk or gate guide (3).

10. Parking brake in accordance with one of Claims 1 to 9,

- whereby the motor axis (A3) runs parallel to the first axis (A1).

## Revendications

1. Frein d'immobilisation à moteur électrique, en particulier pour un véhicule automobile, comprenant :

- un moteur électrique de commande du frein (1), en particulier un moteur à collecteur,
- un arbre de commande du frein ou arbre de sortie (2) entraîné par le moteur électrique de commande du frein (1) et qui s'étend le long d'un deuxième axe (A2),
- une tringlerie de commande du frein (4) qui est disposée de façon à pouvoir se déplacer parallèlement à un premier axe (A1) qui s'étend sensiblement perpendiculairement au deuxième axe (A2),
- une liaison d'entraînement reliant l'arbre de commande du frein ou arbre de sortie (2) à la tringlerie de commande du frein (4) présentant la forme d'un guidage à came ou à coulisse (3) ayant la forme d'une came, qui réalise la transformation de la rotation de l'arbre de commande du frein ou arbre de sortie (2) en une translation de la tringlerie de commande du frein (4) au moyen d'un élément de manoeuvre (5) guidé le long d'une surface (F) du guidage à came ou à coulisse (3),
- dans lequel la surface (F) du guidage à came ou à coulisse (3) forme un profil en hauteur radial,
- dans lequel l'axe (A3) du moteur électrique de commande du frein (1) s'étend sensiblement perpendiculairement au deuxième axe (A2).

2. Frein d'immobilisation selon la revendication 1, comprenant

- un mécanisme à vis sans fin (7) dans la chaîne cinématique comprise entre le moteur électrique de serrage du frein (1) et l'arbre de commande du frein ou arbre de sortie (2).

3. Frein d'immobilisation selon la revendication 1 ou 2, comprenant

- une configuration du guidage à came ou à coulisse (3) agencée pour assurer une sollicitation sensiblement constante du moteur électrique de serrage du frein (1) sensiblement pendant tout le processus de freinage.

4. Frein d'immobilisation selon une des revendications 1 à 3, comprenant

- au moins une zone de crantage (R1) dans la surface (F) du guidage à came ou à coulisse (3) afin d'assurer un positionnement immobilisant de l'élément de manoeuvre (5) assurant un autoblocage à l'encontre de forces de rappel.

5. Frein d'immobilisation selon la revendication 4,

- dans lequel la zone de crantage (R1) se trouve à l'endroit de la surface (F) du guidage à came ou à coulisse (3) où l'élément de manoeuvre (5) se trouve lorsque le frein d'immobilisation est serré sensiblement avec sa force nominale.

**6.** Frein d'immobilisation selon la revendication 4 ou 5,

- dans lequel au moins une autre zone de crantage (R2) est ménagée dans la surface (F) du guidage à came ou à coulisse (3).

**7.** Frein d'immobilisation selon une des revendications 1 à 6,

- dans lequel un mécanisme qui relie l'arbre de commande du frein ou arbre de sortie à l'arbre du moteur est construit sous une forme autobloquante.

**8.** Frein d'immobilisation selon une des revendications 1 à 7, comprenant

- une transformation de mouvement à levier supplémentaire (6) entre l'élément de manoeuvre (5) et la tringlerie de serrage du frein (4).

**9.** Frein d'immobilisation selon une des revendications 1 à 8,

- dans lequel la zone de crantage (R1) est constituée par une dépression de la surface (F) du guidage à came ou à coulisse (3).

**10.** Frein d'immobilisation selon une des revendications 1 à 9,

- dans lequel l'axe (A3) du moteur s'étend parallèlement au premier axe (A1).

FIG 1

FIG 2

B-B

7

2

1

A3

A-A

FIG 3

FIG 4

FIG **5**

$H = f(\alpha)$

(3.1)

Drehwinkel $\alpha$ (°)

360 °

FIG 6

5'

6'

4'